# EUROPEAN PATENT APPLICATION

(11) **EP 4 572 485 A1**
(43) Date of publication of application: **18.06.2025**
(21) Application number: 23870745.9
(22) Date of filing: 25.09.2023
(51) Int. Cl.: H04W 72/11, H04W 72/0446, H04W 72/0453, H04W 52/02, H04W 56/00

(54) **COMMUNICATION METHOD AND APPARATUS**

(30) Priority: 30.09.2022 CN 202211216870
(71) Applicant: Huawei Technologies Co., Ltd., Shenzhen, Guangdong 518129 (CN)
(72) Inventor: TANG, Yunshuai, Shenzhen, Guangdong 518129 (CN); RUAN, Wei, Shenzhen, Guangdong 518129 (CN); MA, Yunsi, Shenzhen, Guangdong 518129 (CN)
(74) Representative: Thun, Clemens
(86) International application number: PCT/CN2023/121212
(87) International publication number: WO 2024/067516

(57) **Abstract**

This application relates to the field of communication technologies, and discloses a communication method and apparatus. The method includes: An AP sends time synchronization information through a first frequency domain resource, where the time synchronization information indicates start time of a first superframe; and the AP communicates with a STA in the first superframe through a second frequency domain resource in a dynamic scheduling manner, where a frequency corresponding to the first frequency domain resource is lower than a frequency corresponding to the second frequency domain resource. According to the method, the AP sends the time synchronization information to the STA through the first frequency domain resource, so that start time synchronization of the first superframe is implemented between the AP and the STA, and the AP and the STA may communicate in the first superframe through the second frequency domain resource in the dynamic scheduling manner. In this way, in comparison with obtaining a transmission resource in a high frequency band in a contention manner, power consumption of the AP or the STA can be effectively reduced.

## Description

### CROSS-REFERENCE TO RELATED APPLICATIONS

This application claims priority to Chinese Patent Application No. 202211216870.3, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, most wireless local area networks (wireless local area networks, WLANs) work in a low frequency band. With increase of devices using the low frequency band, spectrum resources of the low frequency band become very crowded. Therefore, currently, attention is paid to using a high frequency band (for example, a millimeter wave band) to obtain more abundant available spectrum resources.

A high frequency communication protocol (for example, 802.11ad and 802.11ay) of the Institute of Electrical and Electronics Engineers (institute of electrical and electronics engineers, IEEE) specifies that communication in the high frequency band complies with a carrier sense multiple access with collision avoidance (carrier sense multiple access with collision avoidance, CSMA/CA) mechanism. The CSMA/CA mechanism may be, for example, clear channel assessment (clear channel assessment, CCA). CCA is used to discover, through pilot signal detection or energy detection, a signal of another device that may exist on a channel, and determine, based on the signal, whether the current channel is clear. Communication between an access point (access point, AP) and a plurality of stations (stations, STAs) is used as an example. Before the STA sends an uplink signal to the AP, the STA needs to perform CCA. When a result of the CCA is that a channel is clear, the STA may immediately send the uplink signal to the AP. When the result of the CCA is that the channel is busy (that is, the channel is occupied), the STA does not immediately send the uplink signal to the AP, to avoid interference.

However, in the foregoing manner, a receiver cannot determine time at which a transmitter sends a signal. Therefore, detection needs to be performed for a long time. As a result, power consumption of the receiver is high.

### SUMMARY

This application provides a communication method and apparatus, to implement, through mutual coordination between a low frequency band and a high frequency band, communication between an AP and a STA in the high frequency band in a dynamic scheduling manner. In comparison with obtaining a transmission resource in the high frequency band in a contention manner, power consumption of the AP or the STA can be effectively reduced.

According to a first aspect, an embodiment of this application provides a communication method. The method may be applied to an AP or a component (for example, a circuit or a chip) in the AP. For example, the method is applied to the AP. In the method, the AP sends time synchronization information through a first frequency domain resource, where the time synchronization information indicates start time of a first superframe; and the AP communicates with a station STA in the first superframe through a second frequency domain resource in a dynamic scheduling manner, where a frequency corresponding to the first frequency domain resource is lower than a frequency corresponding to the second frequency domain resource.

According to the foregoing method, the AP sends the time synchronization information to the STA through the first frequency domain resource, so that start time synchronization of the first superframe is implemented between the AP and the STA, and the AP and the STA may communicate in the first superframe through the second frequency domain resource in the dynamic scheduling manner. In this way, in comparison with obtaining a transmission resource in a high frequency band in a contention manner, power consumption of the AP or the STA can be effectively reduced, and a data transmission delay can be reduced. In addition, in the dynamic scheduling manner, flexible allocation of a time domain resource can be implemented, thereby improving resource utilization.

In a possible design, the first superframe includes an announcement transmission interval and a data transmission interval; and the communicating with a STA in the first superframe through a second frequency domain resource in a dynamic scheduling manner includes: sending first scheduling information to the STA in the announcement transmission interval through the second frequency domain resource, where the first scheduling information indicates a first time domain resource allocated to the STA in the data transmission interval; and performing data transmission with the STA on the first time domain resource through the second frequency domain resource.

In a possible design, the announcement transmission interval includes K announcement transmission subintervals, each of the K announcement transmission subintervals corresponds to at least one STA associated with the AP, the K announcement transmission subintervals include a first announcement transmission subinterval, the first announcement transmission subinterval corresponds to the STA, and K is a positive integer; and the sending first scheduling information to the STA in the announcement transmission interval through the second frequency domain resource includes: sending the first scheduling information to the STA in the first announcement transmission subinterval through the second frequency domain resource.

In this way, a correspondence between the announcement transmission subinterval and the STA is set, so that the STA can detect scheduling information from the AP in the corresponding common transmission subinterval, and does not need to perform detection in another announcement transmission subinterval, thereby reducing power consumption of the STA.

In a possible design, the data transmission interval includes a downlink data transmission interval and/or an uplink data transmission interval, the downlink data transmission interval includes a plurality of downlink data transmission subintervals, and the uplink data transmission interval includes a plurality of uplink data transmission subintervals; and the first time domain resource includes at least one of the plurality of downlink data transmission subintervals, or the first time domain resource includes at least one of the plurality of uplink data transmission subintervals.

In this way, the plurality of downlink data transmission subintervals or uplink data transmission subintervals are obtained through division, so that the AP indicates, by using the first scheduling information, the first time domain resource allocated to the STA, thereby reducing transmission resource overheads.

In a possible design, when the data transmission interval includes the downlink data transmission interval and the uplink data transmission interval, the plurality of downlink data transmission subintervals are consecutive in time domain, and the plurality of uplink data transmission subintervals are consecutive in time domain; and a first time interval is included between the downlink data transmission interval and the uplink data transmission interval, and the first time interval is used by the AP and/or the STA to perform transmit/receive switching.

In this way, the plurality of uplink or downlink data transmission subintervals are consecutive in time domain, thereby improving resource utilization.

In a possible design, the first superframe further includes a schedule request interval; and the method further includes: receiving a schedule request from the STA in the schedule request interval through the second frequency domain resource, where the schedule request is used to request to allocate a second time domain resource to the STA in a data transmission interval of a second superframe; and the second superframe is a superframe after the first superframe.

In a possible design, the schedule request interval includes N schedule request subintervals, each of the N schedule request subintervals corresponds to the at least one STA associated with the AP, the N schedule request subintervals include a first schedule request subinterval, the first schedule request subinterval corresponds to the STA, and N is a positive integer; and the receiving a schedule request from the STA in the schedule request interval through the second frequency domain resource includes: receiving the schedule request from the STA in the first schedule request subinterval through the second frequency domain resource.

In a possible design, the first superframe includes a third time interval, start time of the third time interval is the start time of the first superframe, and the third time interval is used by the AP and/or the STA to perform transmit/receive switching.

In a possible design, the communicating with a STA in the first superframe through a second frequency domain resource in a dynamic scheduling manner includes: performing clear channel assessment in the third time interval; and if a result of the clear channel assessment is that a channel is clear, communicating with the STA in the first superframe through the second frequency domain resource in the dynamic scheduling manner.

In a possible design, the method further includes: sending indication information through the first frequency domain resource, where the indication information indicates duration of a beamforming training period, the beamforming training period includes at least one superframe, and the first superframe is any superframe in the at least one superframe; and when the first superframe is the 1^{st} superframe within the beamforming training period, the first superframe further includes an A-BFT interval, where the A-BFT interval is used by the AP and the STA to perform beamforming training.

In a possible design, the method further includes: sending configuration information through the first frequency domain resource, where the configuration information is used to configure the second frequency domain resource.

According to a second aspect, an embodiment of this application provides a communication method. The method may be applied to a STA or a component (for example, a circuit or a chip) in the STA. For example, the method is applied to the STA. In the method, the STA receives time synchronization information from an AP through a first frequency domain resource, where the time synchronization information indicates start time of a first superframe; the STA communicates with the AP in the first superframe through a second frequency domain resource in a dynamic scheduling manner, where a frequency corresponding to the first frequency domain resource is lower than a frequency corresponding to the second frequency domain resource.

In a possible design, the first superframe includes an announcement transmission interval and a data transmission interval; and the communicating with the AP in the first superframe through a second frequency domain resource in a dynamic scheduling manner includes: receiving first scheduling information from the AP in the announcement transmission interval through the second frequency domain resource, where the first scheduling information indicates a first time domain resource allocated to the STA in the data transmission interval; and performing data transmission with the AP on the first time domain resource through the second frequency domain resource.

In a possible design, the announcement transmission interval includes K announcement transmission subintervals, each of the K announcement transmission subintervals corresponds to at least one STA associated with the AP, the K announcement transmission subintervals include a first announcement transmission subinterval, the first announcement transmission subinterval corresponds to the STA, and K is a positive integer; and the receiving first scheduling information from the AP in the announcement transmission interval through the second frequency domain resource includes: receiving the first scheduling information from the AP in the first announcement transmission subinterval through the second frequency domain resource.

In a possible design, the data transmission interval includes a downlink data transmission interval and/or an uplink data transmission interval, the downlink data transmission interval includes a plurality of downlink data transmission subintervals, and the uplink data transmission interval includes a plurality of uplink data transmission subintervals; and the first time domain resource includes at least one of the plurality of downlink data transmission subintervals, or the first time domain resource includes at least one of the plurality of uplink data transmission subintervals.

In a possible design, when the data transmission interval includes the downlink data transmission interval and the uplink data transmission interval, the plurality of downlink data transmission subintervals are consecutive in time domain, and the plurality of uplink data transmission subintervals are consecutive in time domain; and a first time interval is included between the downlink data transmission interval and the uplink data transmission interval, and the first time interval is used by the AP and/or the STA to perform transmit/receive switching.

In a possible design, the first superframe further includes a schedule request interval; and the method further includes: sending a schedule request to the AP in the schedule request interval through the second frequency domain resource, where the schedule request is used to request to allocate a second time domain resource to the STA in a data transmission interval of a second superframe; and the second superframe is a superframe after the first superframe.

In a possible design, the schedule request interval includes N schedule request subintervals, each of the N schedule request subintervals corresponds to the at least one STA associated with the AP, the N schedule request subintervals include a first schedule request subinterval, the first schedule request subinterval corresponds to the STA, and N is a positive integer; and the sending a schedule request to the AP in the schedule request interval through the second frequency domain resource includes: sending the schedule request to the AP in the first schedule request subinterval through the second frequency domain resource.

In a possible design, the first superframe includes a third time interval, start time of the third time interval is the start time of the first superframe, and the third time interval is used by the AP and/or the STA to perform transmit/receive switching.

In a possible design, the communicating with the AP in the first superframe through a second frequency domain resource in a dynamic scheduling manner includes: performing clear channel assessment in the third time interval; and if a result of the clear channel assessment is that a channel is clear, communicating with the AP in the first superframe through the second frequency domain resource in the dynamic scheduling manner.

In a possible design, the method further includes: receiving indication information from the AP through the first frequency domain resource, where the indication information indicates duration of a beamforming training period, the beamforming training period includes at least one superframe, and the first superframe is any superframe in the at least one superframe; and when the first superframe is a 1^{st} superframe within the beamforming training period, the first superframe further includes an A-BFT interval, where the A-BFT interval is used by the AP and the STA to perform beamforming training.

In a possible design, the method further includes: receiving configuration information from the AP through the first frequency domain resource, where the configuration information is used to configure the second frequency domain resource.

It may be understood that the method described in the second aspect corresponds to the method described in the first aspect. For beneficial effects of related technical features in the second aspect, refer to the descriptions in the first aspect. Details are not described again.

According to a third aspect, an embodiment of this application provides a communication method. The method may be applied to an AP or a component (for example, a circuit or a chip) in the AP. For example, the method is applied to the AP. In the method, the AP sends time synchronization information through a first frequency domain resource, where the time synchronization information indicates start time of a first superframe; the AP sends second scheduling information through the first frequency domain resource, where the second scheduling information indicates a data transmission interval in the first superframe; and the AP communicates with the STA in the data transmission interval through a second frequency domain resource.

According to the foregoing method, the AP sends the time synchronization information to the STA through the first frequency domain resource, so that start time synchronization of the first superframe is implemented between the AP and the STA. The AP sends semi-persistent scheduling information to the STA through the first frequency domain resource, so that the AP and the STA can communicate with each other on a semi-persistent scheduling resource in the first superframe through the second frequency domain resource. In this way, in comparison with obtaining a transmission resource in a high frequency band in a contention manner, power consumption of the AP or the STA can be effectively reduced.

In a possible design, the data transmission interval includes at least one time unit, and each of the at least one time unit includes a downlink data transmission interval and an uplink data transmission interval. A second time interval is included between the downlink data transmission interval and the uplink data transmission interval, and the second time interval is used by the AP and/or the STA to perform transmit/receive switching.

In this way, because a downlink transmission resource and an uplink transmission resource may alternately appear, a data transmission latency can be more effectively reduced, and a transmission requirement of a low-latency service can be met.

In a possible design, the second time interval is included between two adjacent time units in the at least one time unit.

In a possible design, the first superframe further includes a third time interval, start time of the third time interval is the start time of the first superframe, and the third time interval is used by the AP and/or the STA to perform transmit/receive switching.

In a possible design, the communicating with a STA in the data transmission interval through a second frequency domain resource includes: performing clear channel assessment in the third time interval; and if a result of the clear channel assessment is that a channel is clear, communicating with the STA in the data transmission interval through the second frequency domain resource.

In a possible design, the method further includes: sending indication information through the first frequency domain resource, where the indication information indicates duration of a beamforming training period, the beamforming training period includes at least one superframe, and the first superframe is any superframe in the at least one superframe; and when the first superframe is a 1^{st} superframe within the beamforming training period, the first superframe further includes an A-BFT interval, where the A-BFT interval is used by the AP and the STA to perform beamforming training.

In a possible design, the method further includes: sending configuration information through the first frequency domain resource, where the configuration information is used to configure the second frequency domain resource.

According to a fourth aspect, an embodiment of this application provides a communication method. The method may be applied to a STA or a component (for example, a circuit or a chip) in the STA. For example, the method is applied to the STA. In the method, the STA receives time synchronization information from an AP through a first frequency domain resource, where the time synchronization information indicates start time of a first superframe; the STA receives second scheduling information from the AP through the first frequency domain resource, where the second scheduling information indicates a data transmission interval in the first superframe; and the STA communicates with the AP in the data transmission interval through a second frequency domain resource.

In a possible design, the data transmission interval includes at least one time unit, and each of the at least one time unit includes a downlink data transmission interval and an uplink data transmission interval. A second time interval is included between the downlink data transmission interval and the uplink data transmission interval, and the second time interval is used by the AP and/or the STA to perform transmit/receive switching.

In a possible design, the second time interval is included between two adjacent time units in the at least one time unit.

In a possible design, the first superframe further includes a third time interval, start time of the third time interval is the start time of the first superframe, and the third time interval is used by the AP and/or the STA to perform transmit/receive switching.

In a possible design, the communicating with the AP in the data transmission interval through a second frequency domain resource includes: performing clear channel assessment in the third time interval; and if a result of the clear channel assessment is that a channel is clear, communicating with the AP in the data transmission interval through the second frequency domain resource.

In a possible design, the method further includes: receiving indication information from the AP through the first frequency domain resource, where the indication information indicates duration of a beamforming training period, the beamforming training period includes at least one superframe, and the first superframe is any superframe in the at least one superframe; and when the first superframe is a 1^{st} superframe within the beamforming training period, the first superframe further includes an A-BFT interval, where the A-BFT interval is used by the AP and the STA to perform beamforming training.

In a possible design, the method further includes: receiving configuration information from the AP through the first frequency domain resource, where the configuration information is used to configure the second frequency domain resource.

It may be understood that the method described in the fourth aspect corresponds to the method described in the third aspect. For beneficial effects of related technical features in the fourth aspect, refer to the descriptions in the third aspect. Details are not described again.

According to a fifth aspect, this application provides a communication apparatus. The communication apparatus has functions for implementing the first aspect to the fourth aspect. For example, the communication apparatus includes a corresponding module, unit, or means (means) for performing the operations in the first aspect to the fourth aspect. The module, unit, or means may be implemented by software, or may be implemented by hardware, or may be implemented by hardware by executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect to the fourth aspect.

In a possible design, the communication apparatus includes a processor, and the processor may be configured to be coupled to a memory. The memory may store a necessary computer program or instructions for implementing the functions in the first aspect to the fourth aspect. The processor may execute the computer program or the instructions stored in the memory, and when the computer program or the instructions is/are executed, the communication apparatus is enabled to implement the method in any possible design or implementation of the first aspect to the fourth aspect.

In a possible design, the communication apparatus includes a processor and a memory, and the memory may store a necessary computer program or instructions for implementing the functions in the first aspect to the fourth aspect. The processor may execute the computer program or the instructions stored in the memory, and when the computer program or the instructions is/are executed, the communication apparatus is enabled to implement the method in any possible design or implementation of the first aspect to the fourth aspect.

In a possible design, the communication apparatus includes a processor and an interface circuit. The processor is configured to communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, this application provides a communication system. The communication system may include a first communication apparatus and a second communication apparatus. The first communication apparatus is configured to perform the communication method provided in the first aspect, and the second communication apparatus is configured to perform the communication method provided in the second aspect. Alternatively, the first communication apparatus is configured to perform the communication method provided in the third aspect, and the second communication apparatus is configured to perform the communication method provided in the fourth aspect.

According to a seventh aspect, this application provides a computer-readable storage medium. The computer storage medium stores computer-readable instructions. When a computer reads and executes the computer-readable instructions, the computer is enabled to perform the method according to any one of the possible designs in the first aspect to the fourth aspect.

According to an eighth aspect, this application provides a computer program product. When a computer reads and executes the computer program product, the computer is enabled to perform the method according to any one of the possible designs in the first aspect to the fourth aspect.

According to a ninth aspect, this application provides a chip. The chip includes a processor. The processor is coupled to a memory, and is configured to read and execute a software program stored in the memory, to implement the method according to any one of the possible designs in the first aspect to the fourth aspect.

### BRIEF DESCRIPTION OF DRAWINGS

FIG. 1 is a diagram of a network architecture to which an embodiment of this application is applicable;
FIG. 2 is a diagram of an AP MLD according to an embodiment of this application;
FIG. 3 is a diagram of a link between an AP MLD and a non-AP MLD according to an embodiment of this application;
FIG. 4 is a structural example of a beacon interval according to an embodiment of this application;
FIG. 5 is a schematic flowchart corresponding to a communication method according to Embodiment 1 of this application;
FIG. 6 is a diagram of a structure of a first superframe according to an embodiment of this application;
FIG. 7 is a diagram of a beamforming training period according to an embodiment of this application;
FIG. 8 is a schematic flowchart corresponding to a communication method according to Embodiment 2 of this application;
FIG. 9 is a diagram of a structure of a first superframe according to an embodiment of this application;
FIG. 10 is a diagram of a beamforming training period according to an embodiment of this application;
FIG. 11 is a block diagram of a possible example of an apparatus according to an embodiment of this application;
FIG. 12 is a diagram of a structure of an AP according to an embodiment of this application; and
FIG. 13 is a diagram of a structure of a STA according to an embodiment of this application.

### DESCRIPTION OF EMBODIMENTS

The following describes technical solutions in embodiments of this application with reference to accompanying drawings in embodiments of this application.

Embodiments of this application are applicable to a WLAN, for example, are applicable to any protocol in the Institute of Electrical and Electronics Engineers (institute of electrical and electronics engineers, IEEE) 802.11 series protocols currently used in the WLAN. The WLAN may include one or more basic service sets (basic service sets, BSSs). Network nodes in the basic service set include an access point (access point, AP) and a station (station, STA). In addition, based on the original BSS, IEEE 802.11ad introduces a personal basic service set (personal basic service set, PBSS) and a personal basic service set control point (PBSS control point, PCP). Each personal basic service set may include one AP/PCP and a plurality of non-APs/PCPs associated with the AP/PCP. In embodiments of this application, the non-AP/PCP may be referred to as a STA, and the PCP may be understood as a name of a role of the AP in the PBSS.

Embodiments of this application are also applicable to a wireless local area network like an internet of things (internet of things, IoT) network or a vehicle-to-everything (vehicle to X, V2X) network. Certainly, embodiments of this application are further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

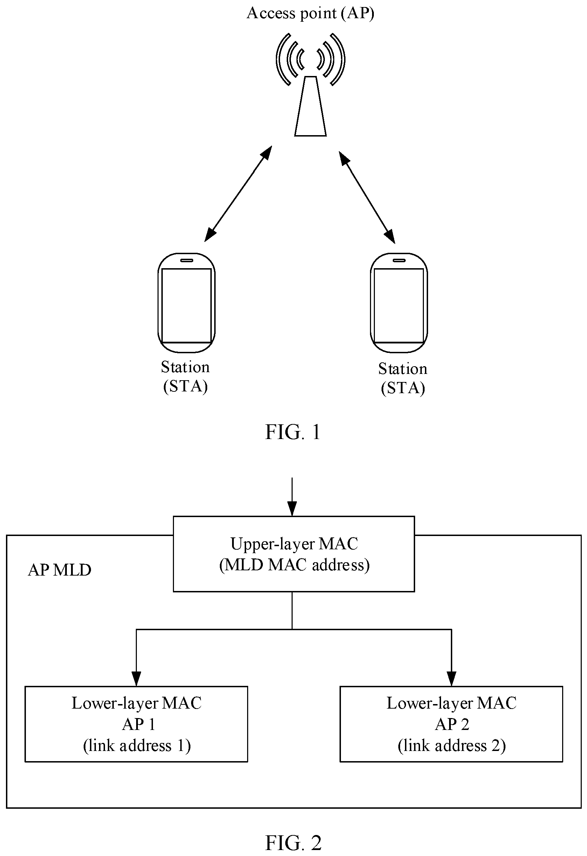

The following uses an example in which embodiments of this application are applicable to the WLAN. FIG. 1 is a diagram of a network architecture of a WLAN to which an embodiment of this application is applicable. In FIG. 1, an example in which the WLAN includes one AP and two STAs is used. A STA associated with the AP can receive a radio frame sent by the AP, and can send a radio frame to the AP. Embodiments of this application are described by using communication between the AP and the STA as an example. It may be understood that embodiments of this application are also applicable to communication between the APs. For example, the APs may communicate with each other through a distributed system (distributed system, DS). Embodiments of this application are also applicable to communication between STAs.

The AP may be an access point used by a terminal device (for example, a mobile phone) to access a wired (or wireless) network, and is mainly deployed in a home, a building, or a campus. A typical coverage radius is tens of meters to hundreds of meters. Certainly, the AP may alternatively be deployed outdoors. The AP is equivalent to a bridge that connects the wired network and the wireless network. A main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, and a computer that supports a Wi-Fi communication function. Optionally, the STA may support the 802.11be standard, or may support the plurality of WLAN standards of the 802.11 family, such as 802.11ax, 802.11ay, 802.11ac, 802.11n, 802.11g, 802.11b, 802.11a and the next generation of 802.11be.

It may be understood that quantities of APs and STAs shown in FIG. 1 are merely examples, and may be large or small.

The AP and the STA in FIG. 1 may be communication apparatuses having a dual-mode communication function, that is, communication apparatuses having a low frequency (low frequency, LF) band (or channel or link) communication mode and a high frequency (high frequency, HF) band communication mode. A low frequency band includes, for example, sub 1 gigahertz (GHz), 2.4 GHz, 5 GHz, and 6 GHz, and a high frequency band includes, for example, 45 GHz and 60 GHz.

For example, the communication apparatus having the dual-mode communication function may be a dual-band dual-concurrent (dual-band dual-concurrent, DBDC) device, or may be a multi-link device (multi-link device, MLD). Descriptions are separately provided below.

### (1) DBDC device

The DBDC device integrates two sets of independent and complete links, including two sets of baseband processors and radio frequency front ends. Therefore, the DBDC device can operate independently in two frequency bands.

When both the AP and the STA are DBDC devices, for example, the AP is a DBDC device 1, and the STA is a DBDC device 2, the AP and the STA may exchange signaling on a low frequency link, to establish a low frequency link connection, and exchange signaling on a high frequency link, to establish a high frequency link connection.

### (2) MLD

In the IEEE 802.11be protocol, the MLD supports a multi-link operation technology. The MLD has a plurality of radio frequency modules that separately operate in different frequency bands. For example, frequency bands in which the MLD operates may be all or a part of sub 1 GHz, 2.4 GHz, 5 GHz, 6 GHz, and high frequency 60 GHz. The MLD may include an AP MLD and/or a non-access point (non-AP) MLD. For example, the non-AP MLD may be a STA MLD.

The AP MLD is used as an example. The AP MLD may include one or more affiliated (affiliated) stations, and each affiliated station has a respective media access control (media access control, MAC) address (address). As shown in FIG. 2, affiliated stations of an AP MLD include an AP 1 and an AP 2, a lower-layer (low) MAC address of the AP 1 is a link address 1, and a lower-layer MAC address of the AP 2 is a link address 2. In addition, the AP MLD has an upper-layer (upper) MAC address, which is referred to as an MLD MAC address.

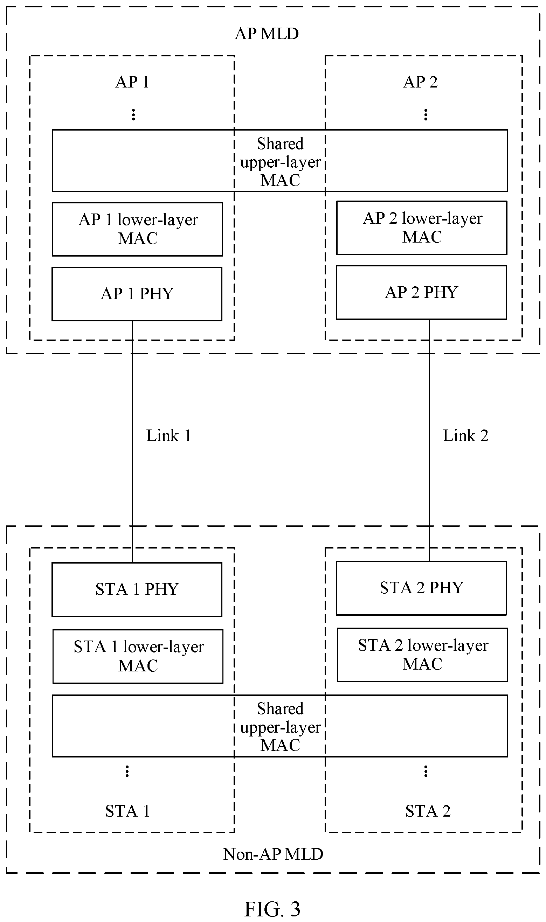

The AP MLD and the non-AP MLD may exchange signaling on a low frequency link, to establish a multi-link connection. As shown in FIG. 3, an AP MLD includes an AP 1 and an AP 2. The AP 1 includes an AP 1 PHY, an AP 1 lower-layer MAC, and an upper-layer MAC. The AP 2 includes an AP 2 PHY, an AP 2 lower-layer MAC, and the upper-layer MAC. The AP 1 and the AP 2 share the upper-layer MAC. A non-AP MLD includes a STA 1 and a STA 2. The STA 1 includes a STA 1 PHY, a STA 1 lower-layer MAC, and an upper-layer MAC. The STA 2 includes a STA 2 PHY, a STA 2 lower-layer MAC, and the upper-layer MAC. The STA 1 and the STA 2 share the upper-layer MAC. The AP 1 and the STA 1 are connected through a link 1, and the AP 2 and the STA 2 are connected through a link 2.

When a plurality of links are established, the non-AP MLD sends an association request (association request) frame on the link 1, where the association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD sends an association response (association response) frame on the link 1, where the association response frame carries AP-side information on the link 1 and further carries AP-side information on the link 2. In this way, the STA 1 and the STA 2 of the non-AP MLD respectively establish association with the AP 1 and the AP 2 of the AP MLD.

The following first explains and describes related technical features in embodiments of this application. These explanations are intended to make embodiments of this application easier to understand, and should not be construed as a limitation on the protection scope claimed in this application.

### (1) Beamforming training

Due to large path losses in a high frequency band, beamforming training needs to be performed when different devices communicate with each other in the high frequency band. In the network architecture shown in FIG. 1, when the AP initiates beamforming training, the AP may be referred to as an initiator (initiator), and the STA may be referred to as a responder (responder). When the STA initiates beamforming training, the STA may be referred to as an initiator, and the AP may be referred to as a responder. In other words, a party that initiates beamforming training may be referred to as an initiator, and a party that responds to beamforming training may be referred to as a responder. Optionally, in some other possible scenarios, a party that initiates beamforming training may be referred to as a responder, and a party that responds to beamforming training may be referred to as an initiator. Alternatively, a party of beamforming training is always referred to as an initiator, and the other party of beamforming training is always referred to as a responder. The initiator initiates beamforming training, or may respond to beamforming training initiated by the responder. Similarly, the responder also initiates beamforming training, and may also respond to beamforming training initiated by the initiator.

In a high frequency communication protocol (for example, the 802.11ad and 802.11ay protocols), beamforming training may include a sector level sweep (sector level sweep, SLS) process and/or a beam refinement protocol (beam refinement protocol, BRP) process. The SLS process includes an initiator sector sweep (initiator sector sweep, ISS) and/or a responder sector sweep (responder sector sweep, RSS). The ISS may include an initiator transmission of sector sweep (initiator transmission of sector sweep, I-TXSS) and/or an initiator reception of sector sweep (initiator reception of sector sweep, I-RXSS). The RSS may include a responder transmission of sector sweep (responder transmission of sector sweep, R-TXSS) and/or a responder reception of sector sweep (responder reception of sector sweep, R-RXSS).

In the I-TXSS, the AP may directionally send a plurality of sector sweep (sector sweep, SSW) frames in the high frequency band. Correspondingly, the STA may receive, in a quasi omnidirectional manner in the high frequency band, at least one SSW frame from the AP, so that the STA may determine an optimal transmit antenna and an optimal transmit sector that are of the AP and that are corresponding to the STA, and feed back an identifier of the optimal transmit antenna and an identifier of the optimal transmit sector to the AP.

In the I-RXSS, the AP may send a plurality of SSW frames in the quasi omnidirectional manner in the high frequency band. Correspondingly, the STA may directionally receive at least one SSW frame in the high frequency band, and then the STA may determine, based on receiving quality of the at least one SSW frame, an optimal receive antenna and an optimal receive sector that are of the STA and that are corresponding to the AP.

In the R-TXSS, the STA may directionally send a plurality of SSW frames in the high frequency band. Correspondingly, the AP may receive, in the quasi omnidirectional manner in the high frequency band, at least one SSW frame from the STA, so that the AP may determine an optimal transmit antenna and an optimal transmit sector that are of the STA and that are corresponding to the AP, and feed back an identifier of the optimal transmit antenna and an identifier of the optimal transmit sector to the STA.

In the R-RXSS, the STA may send a plurality of SSW frames in the quasi omnidirectional manner in the high frequency band. Correspondingly, the AP may directionally receive at least one SSW frame in the high frequency band, so that the AP may determine an optimal receive antenna and an optimal receive sector that are of the AP and that are corresponding to the STA.

It may be understood that the foregoing ISS (that is, I-TXSS and/or I-RXSS) may also be referred to as downlink beamforming training (downlink beamforming training, DL BFT). The optimal transmit antenna and the optimal transmit sector that are of the AP and that are corresponding to the STA are a downlink optimal transmit antenna and a downlink optimal transmit sector. The optimal receive antenna and the optimal receive sector that are of the STA and that are corresponding to the AP are a downlink optimal receive antenna and a downlink optimal receive sector.

The foregoing RSS (that is, R-TXSS and/or R-RXSS) may also be referred to as uplink beamforming training (uplink beamforming training, UL BFT). The optimal transmit antenna and the optimal transmit sector that are of the STA and that are corresponding to the AP are an uplink optimal transmit antenna and an uplink optimal transmit sector. The optimal receive antenna and the optimal receive sector that are of the AP and that are corresponding to the STA are an uplink optimal receive antenna and an uplink optimal receive sector.

In addition, the SLS process is usually used for transmit beam training, and the BRP process is usually used for receive beam training and iterative refinement. If the AP or the STA uses only one transmit antenna mode, receive beam training may be performed as a part of the SLS phase.

### (2) Beacon interval

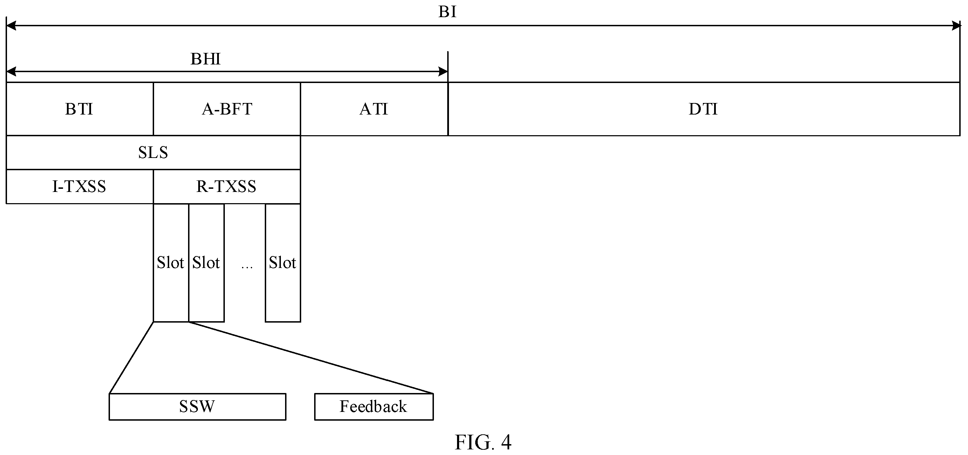

A beacon interval (beacon interval, BI) is introduced in a high frequency communication protocol (for example, the 802.11ad and 802.11ay protocols). FIG. 4 is a diagram of a structure of a beacon interval. As shown in FIG. 4, the beacon interval is divided into a beacon header indication (beacon header indication, BHI) and a data transmission interval (data transmission interval, DTI). The BHI includes a beacon transmission interval (beacon transmission interval, BTI), an association beamforming training (association beamforming training, A-BFT) interval, and an announcement transmission interval (announcement transmission interval, ATI).

The BTI is a time interval from a start of a first directional multi-gigabit (directional multi-gigabit, DMG) beacon frame (beacon frame) sent by the AP in the beacon interval to an end of transmission of a last DMG beacon frame in the same beacon interval. A plurality of DMG beacon frames sent by the AP within the BTI may be used for ISS.

A-BFT may be used for association between a plurality of STAs and an AP, and the RSS. Frames transmitted in the A-BFT interval may include an SSW frame, an SSW feedback frame (or a short SSW frame, or a short SSW feedback frame), and the like.

The ATI is used by the AP to poll buffered data information to the STA, or used by the AP to send an announcement (for example, a management frame), or used by the AP to allocate a resource in the DTI to the STA, that is, used to divide the resource in the DTI into several subintervals.

The DTI may include several subintervals. Based on different access forms, the several subintervals may be classified into a contention-based access period (contention-based access period, CBAP) and a service period (service period, SP). The CBAP is a transmission time period in which the STA accesses a channel in a contention manner, and the SP is a resource allocated to a specific STA.

Currently, the high frequency communication protocol uses communication in the high frequency band as an independent communication technology, and specifies that communication in the high frequency band complies with a CSMA/CA mechanism. The CSMA/CA mechanism may be, for example, CCA. For example, before the AP sends a downlink signal to the STA, the AP needs to perform CCA. When a result of the CCA is that a channel is clear, the AP may immediately send the downlink signal to the STA. When the result of the CCA is that the channel is busy (that is, the channel is occupied), the AP does not immediately send the downlink signal to the STA, to avoid interference. Similarly, before the STA sends an uplink signal to the AP, the STA needs to perform CCA. When a result of the CCA is that a channel is clear, the STA may immediately send the uplink signal to the AP. When the result of the CCA is that the channel is busy (that is, the channel is occupied), the STA does not immediately send the uplink signal to the AP, to avoid interference.

In other words, the AP or the STA obtains a transmission resource in a contention manner. In the foregoing manner, a receiver cannot determine time at which a transmitter sends a signal. Therefore, detection needs to be performed for a long time. As a result, power consumption of the receiver is high.

Based on this, embodiments of this application provide a communication method, to implement, through mutual coordination between a low frequency band and a high frequency band, communication between an AP and a STA in the high frequency band in a dynamic scheduling manner or a semi-persistent scheduling manner. In comparison with obtaining a transmission resource in the high frequency band in a contention manner, power consumption of the AP or the STA can be effectively reduced.

The following describes in detail, with reference to specific embodiments, the communication method provided in embodiments of this application. In a specific embodiment, an example in which the method provided in embodiments of this application is applied to the network architecture shown in FIG. 1 is used. In addition, the method may be performed by two communication apparatuses. The two communication apparatuses are, for example, a first communication apparatus and a second communication apparatus. The first communication apparatus may be an AP or a communication apparatus that can support the AP in implementing a function required by the method, or certainly may be another communication apparatus, for example, a chip or a chip system. The second communication apparatus may be a STA or a communication apparatus that can support the STA in implementing a function required by the method, or certainly may be another communication apparatus, for example, a chip or a chip system. For ease of description, the following uses an example in which the method is performed by the AP and the STA, to be specific, an example in which the first communication apparatus is the AP and the second communication apparatus is the STA.

### Embodiment 1

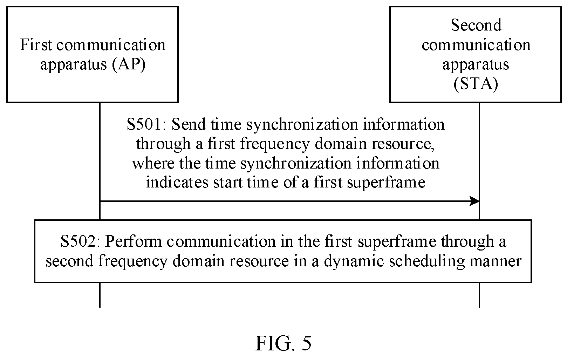

FIG. 5 is a schematic flowchart corresponding to a communication method according to Embodiment 1 of this application. As shown in FIG. 5, the procedure may include the following steps.

S501: An AP sends time synchronization information through a first frequency domain resource, where the time synchronization information indicates start time of a first superframe.

### (1) The first frequency domain resource and a second frequency domain resource are described.

For example, the first frequency domain resource is different from the second frequency domain resource in the following, and a frequency corresponding to the first frequency domain resource is lower than a frequency corresponding to the second frequency domain resource. A frequency domain resource may be understood as a frequency range, and that a frequency corresponding to the first frequency domain resource is lower than a frequency corresponding to the second frequency domain resource may mean that a highest frequency corresponding to the first frequency domain resource is lower than a lowest frequency corresponding to the second frequency domain resource. For example, the first frequency domain resource is a frequency domain resource in a low frequency band, and the second frequency domain resource is a frequency domain resource in a high frequency band.

### (2) Content included in the time synchronization information is described.

For example, the time synchronization information may include start time information of the first superframe and a number or a frame number of the first superframe, and the start time information represents specific time, for example, the specific time represented by the start time information is year X1 month X2 day X3 hour X4 minute X5 second X6 millisecond X7 nanosecond X8. In this case, a STA may use the specific time represented by the start time information as the start time of the first superframe. The start time information of the first superframe is used by the AP and the STA to align the start time of the first superframe. In another possible embodiment, the start time of the first superframe may also be replaced with a frame boundary of the first superframe.

Optionally, the time synchronization information further includes time information of first time precision and time information of second time precision. The first time precision is lower than the second time precision. For example, the first time precision may be at a microsecond (µs) level (for example, 1 µs to 25 µs), and the second time precision may be at a nanosecond (ns) level. The time information of the first time precision and the time information of the second time precision are used by the AP and the STA to implement time synchronization.

It may be understood that, after determining the start time of the first superframe based on the time synchronization information, the STA may determine start time of a subsequent superframe based on a frame length of a superframe (for example, may be indicated by the AP to the STA in the low frequency band). In addition, the STA may further perform time synchronization tracking in the low frequency band.

### (3) A specific implementation in which the AP sends time synchronization is described.

There may be a plurality of specific implementations in which the AP sends the time synchronization information through the first frequency domain resource. Two possible implementations are described herein.

In a first possible implementation, the AP may send a low frequency beacon frame on the first frequency domain resource, where the low frequency beacon frame includes the time information of the first time precision. The AP may further send a high frequency beacon frame (for example, a DMG beacon frame) on the first frequency domain resource. In embodiments of this application, two extension fields may be designed in the high frequency beacon frame. One extension field includes the time information of the second time precision, and the other extension field includes the start time information of the first superframe.

In a second possible implementation, the AP may send a low frequency beacon frame on the first frequency domain resource, where the low frequency beacon frame includes the time information of the first time precision. Further, in embodiments of this application, two extension fields may be designed in the low frequency beacon frame. One extension field includes the time information of the second time precision, and the other extension field includes the start time information of the first superframe.

For example, the AP may send the time synchronization information on the first frequency domain resource in a broadcast or multicast manner, and then a plurality of STAs may receive the time synchronization information. For example, in the foregoing first possible implementation, the AP may send the low frequency beacon frame and the high frequency beacon frame on the first frequency domain resource in the broadcast manner. In the foregoing second possible implementation, the AP may send the low frequency beacon frame on the first frequency domain resource in the broadcast manner.

In addition, when the foregoing second possible implementation is used, the AP may further send a high frequency beacon frame (for example, broadcast the high frequency beacon frame) in the low frequency band. In the beacon interval described above, the AP may broadcast the high frequency beacon frame in the BTI in the high frequency band. However, because a broadcast signal needs to cover all directions, and attenuation in the high frequency band is serious, to ensure that the broadcast signal can be correctly received, the AP needs to send the broadcast signal in a plurality of sectors to ensure that all locations can be covered. As a result, power consumption of the AP is high. However, a coverage area of the low frequency band is large, and sending the high-frequency beacon frame in the low frequency band can implement more reliable transmission, and facilitate reduction of power consumption of the AP.

S502: The AP communicates with the STA in the first superframe through the second frequency domain resource in a dynamic scheduling manner.

For example, the AP may send configuration information through the first frequency domain resource. The configuration information is used to configure the second frequency domain resource. For example, the configuration information may include a frequency and/or bandwidth of the second frequency domain resource. Alternatively, the frequency and/or the bandwidth of the second frequency domain may be predefined.

For example, the AP may communicate with a plurality of STAs in the first superframe through the second frequency domain resource in the dynamic scheduling manner. For example, the plurality of STAs include a first STA. The following uses communication between the AP and the first STA as an example for description. In dynamic scheduling, the AP may send first scheduling information to the first STA in the first superframe through the second frequency domain resource. The first scheduling information indicates a first time domain resource allocated to the first STA in the first superframe. The first time domain resource may be used for one time of uplink data transmission or one time of downlink data transmission. In other words, in dynamic scheduling, a resource used by the first STA to perform uplink transmission or downlink transmission each time may be allocated by the AP to the first STA by using the scheduling information.

For example, the first superframe may include an announcement transmission interval and a data transmission interval. Optionally, the first superframe further includes at least one of the following: a schedule request (schedule request, SR) interval, an A-BFT interval, and a third time interval.

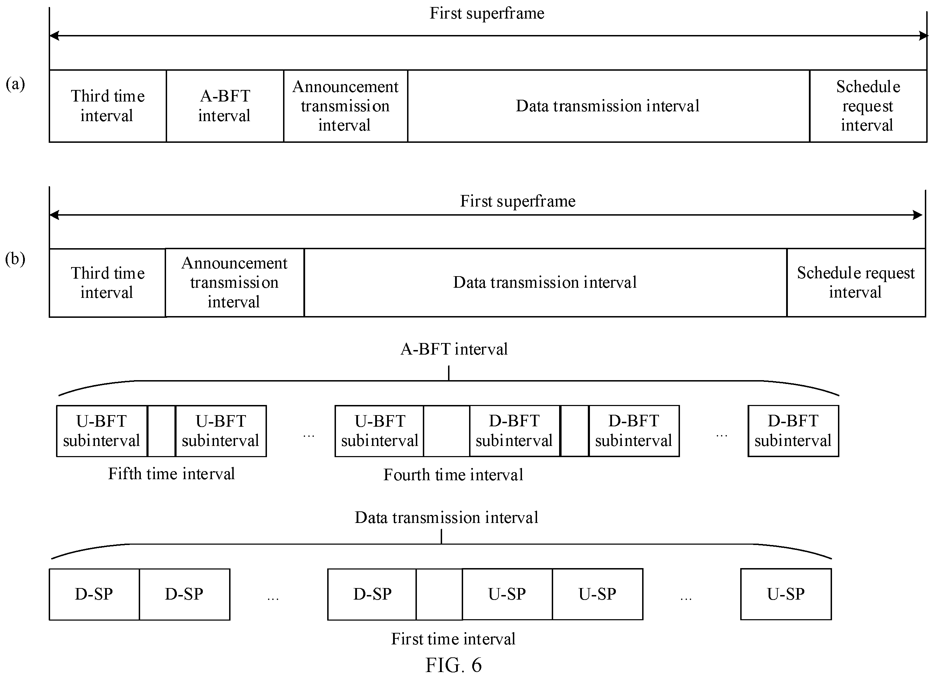

FIG. 6 is a diagram of a structure of a first superframe. (a) in FIG. 6 is a possible structural example of the first superframe, and (b) in FIG. 6 is another possible structural example of the first superframe. (a) in FIG. 6 is used as an example. Start time of the third time interval is the start time of the first superframe, end time of the third time interval is start time of the A-BFT interval, end time of the A-BFT interval is start time of the announcement transmission interval, end time of the announcement transmission interval is start time of the data transmission interval, end time of the data transmission interval is start time of the schedule request interval, and end time of the schedule request interval is end time of the first superframe. It may be understood that specific locations of various intervals included in the first superframe may not be limited in embodiments of this application, and the location relationship shown in FIG. 6 is merely a possible example.

### (1) Announcement transmission interval

The announcement transmission interval may be used by the AP to send scheduling information to a plurality of STAs through the second frequency domain resource. For example, the AP may send the first scheduling information to the first STA in the announcement transmission interval through the second frequency domain resource, where the first scheduling information indicates the first time domain resource allocated to the first STA in the data transmission interval.

In a possible implementation, the announcement transmission interval may include K announcement transmission subintervals, each of the K announcement transmission subintervals corresponds to at least one STA, and K is a positive integer. For example, each announcement transmission subinterval corresponds to one STA or one STA group, and one STA group may include one or more STAs.

If an announcement transmission subinterval corresponding to the first STA is a first announcement transmission subinterval, the AP may send the first scheduling information to the first STA in the first announcement transmission subinterval through the second frequency domain resource. In this way, the first STA may detect the scheduling information from the AP in the first common transmission subinterval, and does not need to perform detection in another announcement transmission subinterval, thereby reducing power consumption of the first STA.

A correspondence between the STA and the announcement transmission subinterval may be indicated by the AP to the STA. The first STA is used as an example. After the AP is associated with the first STA, the AP may send indication information to the first STA on the first frequency domain resource, where the indication information indicates the first STA to associate with the first announcement transmission subinterval in the K announcement transmission subintervals.

Alternatively, the correspondence between the STA and the announcement transmission subinterval meets a preset rule, and the preset rule may be predefined in a protocol. For example, the preset rule may be i=FmodK, where i represents a number of the announcement transmission subinterval corresponding to the first STA. For example, numbers of the K announcement transmission subintervals are respectively 0, 1, ..., and K-1. F represents identification information of the first STA, where the identification information of the first STA may be a sequence number; and mod represents a modulo operation.

### (2) Data transmission interval

The data transmission interval may also be referred to as an SP, and the data transmission interval may be used by the AP to perform data transmission with a plurality of STAs through the second frequency domain resource. For example, if the AP sends the first scheduling information to the first STA (the first scheduling information indicates the first time domain resource allocated by the AP to the first STA in the data transmission interval), the AP and the first STA may perform data transmission on the first time domain resource through the second frequency domain resource.

In a possible implementation, as shown in FIG. 6, the data transmission interval may include a downlink data transmission interval and/or an uplink data transmission interval. In FIG. 6, an example in which the data transmission interval may include the downlink data transmission interval and the uplink data transmission interval is used for illustration. The downlink data transmission interval may include a plurality of downlink data transmission subintervals (which may also be referred to as D-SPs), and duration of the plurality of downlink data transmission subintervals may be the same. The uplink data transmission interval may include a plurality of uplink data transmission subintervals (which may also be referred to as U-SPs), and duration of the plurality of uplink data transmission subintervals may be the same.

Further, the plurality of downlink data transmission subintervals are consecutive in time domain, that is, the downlink data transmission interval is a segment of consecutive time domain resources. The plurality of uplink data transmission subintervals are consecutive in time domain, that is, the uplink data transmission interval is a segment of consecutive time domain resources. In comparison with the conventional technology, in the conventional technology, there is a short inter-frame space (short inter-frame space, SIFS) between different frames (because CCA needs to be performed before a frame is sent, and the frame can be sent only when a channel is clear, there is an SIFS between different frames). However, in this embodiment of the present invention, the plurality of uplink or downlink data transmission subintervals are consecutive in time domain, thereby improving resource utilization. In addition, a first time interval is included between the downlink data transmission interval and the uplink data transmission interval, and the first time interval is used by the AP and/or the STA to perform transmit/receive switching (or uplink/downlink switching).

The first time domain resource may include at least one of the plurality of downlink data transmission subintervals. In this case, the at least one downlink data transmission subinterval is used for one time of downlink data transmission. Alternatively, the first time domain resource includes at least one of the plurality of uplink data transmission subintervals. In this case, the at least one uplink data transmission subinterval is used for one time of uplink data transmission.

The first scheduling information may indicate the first time domain resource in a plurality of manners. For example, the first time domain resource is a time domain resource used for downlink data transmission. When the downlink data transmission interval may include the plurality of downlink data transmission subintervals, the first scheduling information may include a plurality of bits. The plurality of bits are in a one-to-one correspondence with the plurality of downlink data transmission subintervals. For example, a bit 1 corresponds to a downlink data transmission subinterval 1. When a value of the bit 1 is 1, it indicates that the first time domain resource includes the downlink data transmission subinterval 1. When the value of the bit 1 is 0, it indicates that the first time domain resource does not include the downlink data transmission subinterval 1.

### (3) Schedule request interval

The schedule request interval may be used by the plurality of STAs to send a schedule request to the AP through the second frequency domain resource. For example, the first STA may send the schedule request to the AP in the schedule request interval through the second frequency domain resource, where the schedule request is used to request to allocate a second time domain resource to the first STA in a data transmission interval of a second superframe. The second superframe is a superframe after the first superframe. For example, the second superframe may be a next superframe of the first superframe.

In a possible implementation, the schedule request interval may include N schedule request subintervals, each of the N schedule request subintervals corresponds to the at least one STA, and N is a positive integer. For example, each schedule request subinterval corresponds to one STA or one STA group, and one STA group may include one or more STAs.

If a schedule request subinterval corresponding to the first STA is a first schedule request subinterval, the first STA may send the schedule request to the AP in the first schedule request subinterval through the second frequency domain resource.

A correspondence between the STA and the schedule request subinterval may be indicated by the AP to the STA. Alternatively, the correspondence between the STA and the schedule request subinterval meets a preset rule, and the preset rule may be predefined in a protocol. For details, refer to the foregoing description of the correspondence between the STA and the announcement transmission subinterval.

### (4) A-BFT interval

The A-BFT interval may be used by the AP to perform beamforming training with the plurality of STAs through the second frequency domain resource. For example, the AP and the first STA may perform beamforming training in the A-BFT interval through the second frequency domain resource. Beamforming training may include an SLS process and/or a BRP process. In other words, a frame transmitted between the AP and the first STA in the A-BFT interval may include an SSW frame and/or a BRP frame, which may be specifically indicated by the AP to the STA through the first frequency domain resource.

In a possible implementation, as shown in FIG. 6, the A-BFT interval may include a U-BFT interval and a D-BFT interval. The U-BFT interval is used to perform uplink beamforming training, and the D-BFT interval is used to perform downlink beamforming training. A fourth time interval is included between the U-BFT interval and the D-BFT interval, and the fourth time interval is used by the AP and/or the STA to perform transmit/receive switching. Further, the U-BFT interval may include a plurality of U-BFT subintervals, a fifth time interval is included between two adjacent U-BFT subintervals, and the fifth time interval is used to perform beam switching. For example, the fifth time interval may be a short beamforming inter-frame space (short beamforming inter-frame space, SBIFS). The D-BFT interval may include a plurality of D-BFT subintervals, and a fifth time interval is included between two adjacent D-BFT subintervals.

### (5) Third time interval

The third time interval may be used by the AP and/or the STA to perform transmit/receive switching. Optionally, the third time interval is further used by the AP and/or the STA to perform clear channel assessment.

For example, the AP may perform clear channel assessment in the third time interval. If a result of the clear channel assessment is that a channel is clear, the AP may communicate with the at least one STA in the first superframe. For example, the AP may send the scheduling information to the at least one STA in the announcement transmission interval, and perform data transmission with the at least one STA in the data transmission interval. If the result of the clear channel assessment is that the channel is busy, the AP may not send the scheduling information in the announcement transmission interval of the first superframe.

For another example, the STA may perform clear channel assessment in the third time interval. If a result of the clear channel assessment is that a channel is clear, the STA may send the schedule request in the schedule request interval of the first superframe. If the result of the clear channel assessment is that the channel is busy, the STA may not send the schedule request in the schedule request interval of the first superframe.

In this way, the AP and/or the STA perform/performs clear channel assessment in the third time interval of the first superframe, and determines, based on the result of the clear channel assessment, whether to send the information in the first superframe, thereby effectively avoiding interference. In addition, because the AP and/or the STA need/needs to perform clear channel assessment only once in the first superframe, power consumption of the AP and/or the STA is reduced.

According to the foregoing method, the AP sends the time synchronization information to the STA through the first frequency domain resource, so that start time synchronization of the first superframe is implemented between the AP and the STA, and the AP and the STA may communicate in the first superframe through the second frequency domain resource in the dynamic scheduling manner. In this way, in comparison with obtaining a transmission resource in a high frequency band in a contention manner, power consumption of the AP or the STA can be effectively reduced, and a data transmission delay can be reduced (for example, a transmission delay at a physical layer can reach a millisecond level). In addition, in the dynamic scheduling manner, flexible allocation of a time domain resource can be implemented, thereby improving resource utilization.

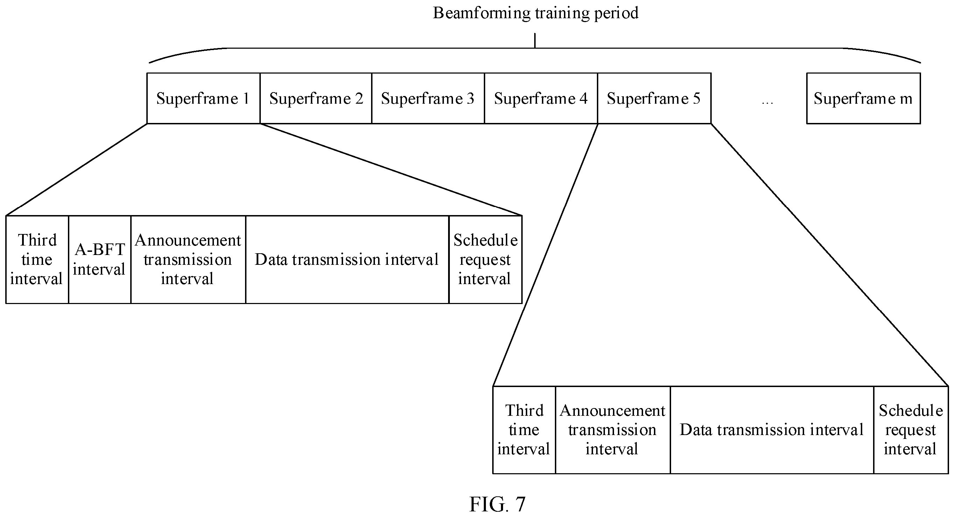

In addition, the first superframe in Embodiment 1 may be any superframe within a beamforming training period. The following describes, with reference to FIG. 7, the beamforming training period introduced in embodiments of this application.

FIG. 7 is a diagram of a beamforming training period. As shown in FIG. 7, the beamforming training period may include at least one superframe. For example, the beamforming training period includes m superframes, which are respectively a superframe 1, a superframe 2, ..., and a superframe m. The at least one superframe may include one first-type superframe and m-1 second-type superframes. The first-type superframe may be a 1^{st} superframe (that is, the superframe 1) of the beamforming training period. In this case, the superframe 2 to the superframe m are all second-type superframes. It may be understood that the first-type superframe may alternatively be a superframe in the superframe 2 to the superframe m in the beamforming training period. A specific location of the first-type superframe in the beamforming training period is not limited in embodiments of this application.

A difference between the first-type superframe and the second-type superframe lies in that the first-type superframe includes an A-BFT interval, and the second-type superframe does not include an A-BFT interval. For example, the first-type superframe may be shown in (a) in FIG. 6, and the second-type superframe may be shown in (b) in FIG. 6.

In a possible implementation, the AP may send beamforming training period information on the first frequency domain resource, where the beamforming period information indicates a time allocation status of each superframe included in the beamforming period. For example, the AP may send the beamforming training period information by using an extension field in a high frequency beacon frame, or may send the beamforming training period information by using an extension field in a low frequency beacon frame, or may send the beamforming training period information by using other signaling transmitted in the low frequency band. This is not specifically limited.

For example, the beamforming training period information may include at least one of the following.
(1) Duration of the beamforming training period. It can be learned from the foregoing description of the beacon interval that one beacon interval includes one A-BFT interval, that is, the beacon interval is the same as the beamforming training period. However, in embodiments of the present invention, the AP may send a high frequency beacon frame in the low frequency band, and perform beamforming training in the high frequency band. In other words, a beacon frame period and the beamforming training period may be decoupled. Therefore, in embodiments of this application, the beacon frame period may be equal to the beamforming training period, or the beacon frame period may not be equal to the beamforming training period, so that more flexible setting can be implemented. The duration of the beamforming training period may be set by the AP based on an actual requirement and indicated to the STA.
(2) A quantity of superframes included in the beamforming training period, for example, a value of m.
(3) Duration of the first-type superframe. For example, the duration of the first-type superframe may be 5 ms, 1 ms, or 0.5 ms.
(4) Time allocation information of the first-type superframe. For example, the time allocation information of the first-type superframe may include at least one of the following: duration or type information of the third time interval, time allocation information of the A-BFT interval, time allocation information of the announcement transmission interval, time allocation information of the data transmission interval, and time allocation information of the schedule request interval.

For example, a plurality of time interval types may be predefined, and different types correspond to different duration. Further, after the AP indicates a type of the third time interval to the STA, the STA may determine the type of the third time interval based on a correspondence between the type and duration.

The time allocation information of the A-BFT interval may include at least one of the following: duration of the A-BFT interval, duration of the U-BFT interval, duration of the U-BFT subinterval, a quantity of U-BFT intervals, duration of the D-BFT interval, duration of the D-BFT subinterval, a quantity of D-BFT intervals, duration or type information of the fourth time interval, and duration or type information of the fifth time interval.

The time allocation information of the announcement transmission interval may include at least one of the following: duration of the announcement transmission interval, a quantity of announcement transmission subintervals, and duration of the announcement transmission subinterval.

The time allocation information of the data transmission interval may include at least one of the following: duration of the data transmission interval, duration of the downlink data transmission interval, duration of the downlink data transmission subinterval, a quantity of downlink data transmission subintervals, duration of the uplink data transmission interval, duration of the uplink data transmission subinterval, a quantity of uplink data transmission subintervals, and duration and/or type information of the first time interval.

The time allocation information of the schedule request interval may include at least one of the following: duration of the schedule request interval, a quantity of schedule request subintervals, and duration of the schedule request subinterval.
(5) Duration of the second-type superframe. The duration of the second-type superframe may be the same as the duration of the first-type superframe.
(6) Time allocation information of the second-type superframe. For the time allocation information of the second-type superframe, refer to the time allocation information of the first-type superframe. For example, the time allocation information of the second-type superframe may reuse the time allocation information of the first-type superframe.

In other words, the AP may indicate the time allocation status of the superframe to the STA through the first frequency domain resource. A specific indication manner may not be limited in embodiments of this application. In another possible embodiment, the time allocation status of the superframe or a time allocation status of one or more intervals in the superframe may alternatively be pre-agreed in a protocol.

### Embodiment 2

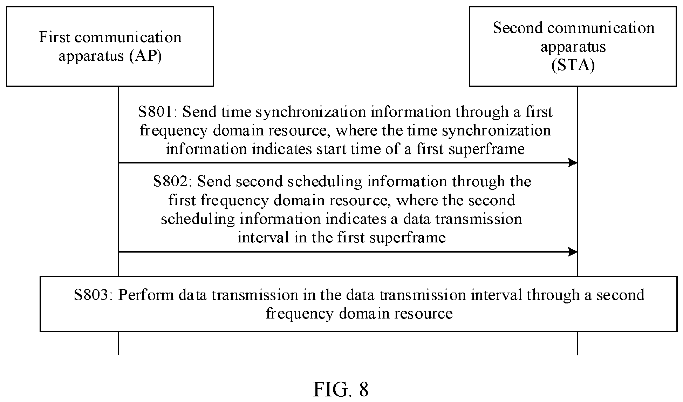

FIG. 8 is a schematic flowchart corresponding to a communication method according to Embodiment 2 of this application. As shown in FIG. 8, the procedure may include the following steps.

S801: An AP sends time synchronization information through a first frequency domain resource, where the time synchronization information indicates start time of a first superframe.

Herein, for a specific implementation of S801, refer to S501 in Embodiment 1.

S802: The AP sends second scheduling information through the first frequency domain resource, where the second scheduling information indicates a data transmission interval in the first superframe. Correspondingly, a STA receives the second scheduling information on the first frequency domain resource.

For example, the AP may send the second scheduling information through the first frequency domain resource in a broadcast or multicast manner. For example, the AP may send the second scheduling information by using an extension field in a high frequency beacon frame, or may send the second scheduling information by using an extension field in a low frequency beacon frame, or may send the second scheduling information by using other signaling transmitted in a low frequency band. This is not specifically limited.

S803: The AP and the STA perform data transmission in the data transmission interval through a second frequency domain resource.

The second scheduling information may be understood as semi-persistent scheduling information. In a possible implementation, in semi-persistent scheduling, the AP may allocate periodic uplink and downlink time domain resources in the data transmission interval. For example, the AP may send the second scheduling information on the first frequency domain resource, where the second scheduling information indicates the periodic uplink and downlink time domain resources in the data transmission interval. Further, the AP and the STA may perform data transmission on the periodic uplink and downlink time domain resources through the second frequency domain resource.

As described above, the first superframe may include the data transmission interval. Optionally, the first superframe further includes at least one of the following: A-BFT interval, and a third time interval.

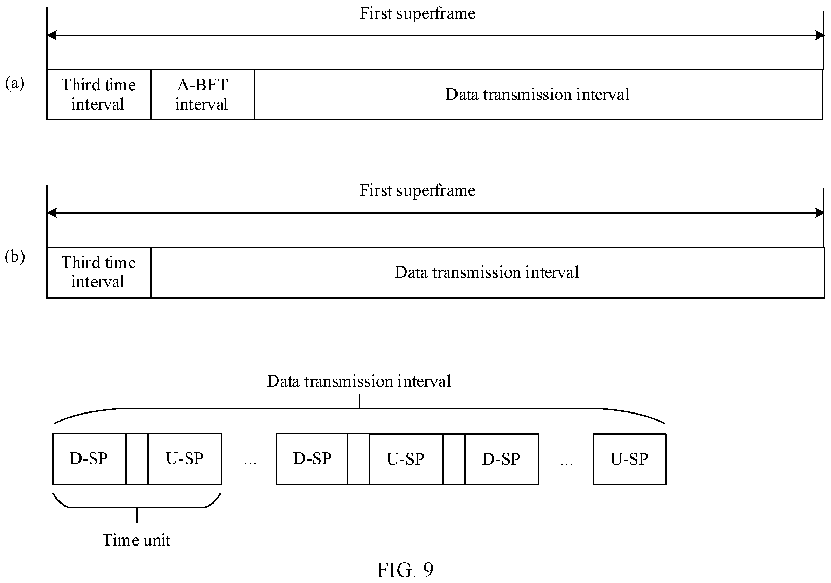

FIG. 9 is a diagram of a structure of a first superframe. (a) in FIG. 9 is a possible structural example of the first superframe, and (b) in FIG. 9 is another possible structural example of the first superframe. (a) in FIG. 9 is used as an example. Start time of the third time interval is the start time of the first superframe, end time of the third time interval is start time of the A-BFT interval, end time of the A-BFT interval is start time of the data transmission interval, and end time of the data transmission interval is end time of the first superframe. It may be understood that specific locations of various intervals included in the first superframe may not be limited in embodiments of this application, and the location relationship shown in FIG. 9 is merely a possible example.

For example, as shown in FIG. 9, the data transmission interval may include at least one time unit, and each of the at least one time unit includes a downlink data transmission interval and an uplink data transmission interval. A second time interval is included between the downlink data transmission interval and the uplink data transmission interval, and the second time interval is used by the AP and/or the STA to perform transmit/receive switching. When the data transmission interval includes a plurality of time units, the downlink data transmission interval periodically appears, and the uplink data transmission interval also periodically appears. For descriptions of the A-BFT interval and the third time interval, refer to Embodiment 1. Details are not described again.

According to the foregoing method, the AP sends the time synchronization information to the STA through the first frequency domain resource, so that start time synchronization of the first superframe is implemented between the AP and the STA. The AP sends the semi-persistent scheduling information to the STA through the first frequency domain resource, so that the AP and the STA can communicate with each other on a semi-persistent scheduling resource in the first superframe through the second frequency domain resource. In this way, in comparison with obtaining a transmission resource in a high frequency band in a contention manner, power consumption of the AP or the STA can be effectively reduced. In addition, in semi-persistent scheduling, because a downlink transmission resource and an uplink transmission resource may appear alternately, a data transmission delay can be more effectively reduced, and a transmission requirement of a low-latency service can be met.

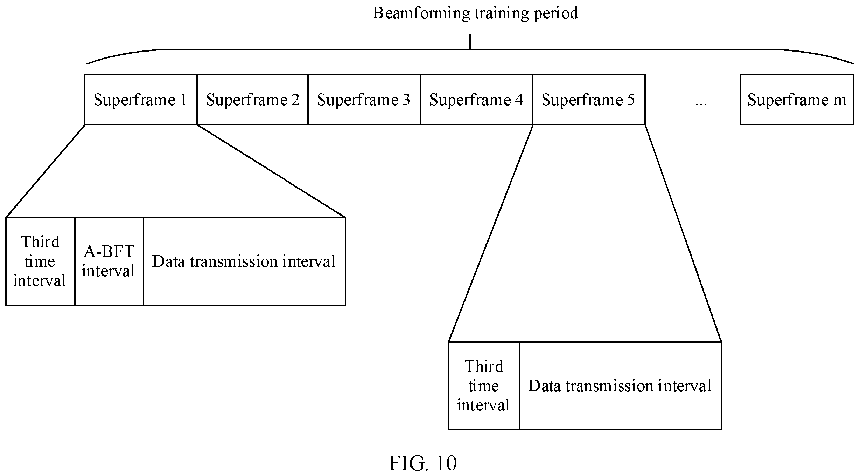

In addition, the first superframe in Embodiment 2 may be any superframe within a beamforming training period. The following describes, with reference to FIG. 10, the beamforming training period introduced in embodiments of this application.

FIG. 10 is a diagram of a beamforming training period. As shown in FIG. 10, the beamforming training period may include one first-type superframe and m-1 second-type superframes. The first-type superframe may be a 1^{st} superframe (that is, a superframe 1) of the beamforming training period. In this case, a superframe 2 to a superframe m are all second-type superframes. A difference between the first-type superframe and the second-type superframe lies in that the first-type superframe includes an A-BFT interval, and the second-type superframe does not include an A-BFT interval. For example, the first-type superframe may be shown in (a) in FIG. 9, and the second-type superframe may be shown in (b) in FIG. 9.

It may be understood that a difference between FIG. 10 and FIG. 7 lies in that structures of superframes included in the beamforming training periods are different. For content other than the difference, refer to the description in FIG. 7.

For the foregoing embodiment, it may be understood that:
(1) The foregoing focuses on a difference between Embodiment 1 and Embodiment 2. Except for other content of the difference, Embodiment 1 and Embodiment 2 may be mutually referenced. In addition, in a same embodiment, different implementations or different examples may also be mutually referenced.
(2) The solutions described in Embodiment 1 and Embodiment 2 are merely some examples of coordination between a low frequency band and a high frequency band. Coordination between the high frequency band and the low frequency band is also applicable to another possible scenario, to make full use of advantages of a low frequency communication technology and simplify design of a high frequency communication technology, and implement high frequency communication with a less chip area and low power consumption.

For example, frequency synchronization may be implemented through coordination between the high frequency band and the low frequency band. For example, the AP or the STA may obtain frequency offset estimation information in the low frequency band, and then perform frequency synchronization in the high frequency band by using the frequency offset estimation information in the low frequency band. Alternatively, the AP or the STA may obtain the frequency offset estimation information in the high frequency band, and then perform frequency synchronization in the low frequency band by using the frequency offset estimation information in the high frequency band.

For another example, in addition to the high frequency beacon frame, other possible information may also be transmitted in the low frequency band. For example, information having a low delay requirement, such as acknowledgment information, feedback information, channel measurement information, and beam measurement information, may be transmitted more reliably in the low frequency band. In addition, a waste of time and power consumption caused by high frequency beam scanning is avoided, so that the high frequency band can focus on point-to-point efficient transmission.

For another example, in the conventional technology, when no data is transmitted on a high frequency link, to maintain a connection on the high frequency link, a STA may need to periodically communicate with an AP on the high frequency link (for example, periodically receive a high frequency beacon frame on the high frequency link). As a result, standby power consumption is possibly increased. In embodiments of this application, when no data is transmitted on the high frequency link, signaling in a standby status may be transmitted in the low frequency band, to maintain a connection on the high frequency link, thereby reducing standby power consumption on the high frequency link.

The foregoing mainly describes the solutions provided in embodiments of this application from a perspective of interaction between communication apparatuses. It may be understood that, to implement the foregoing functions, the first communication apparatus and the second communication apparatus may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

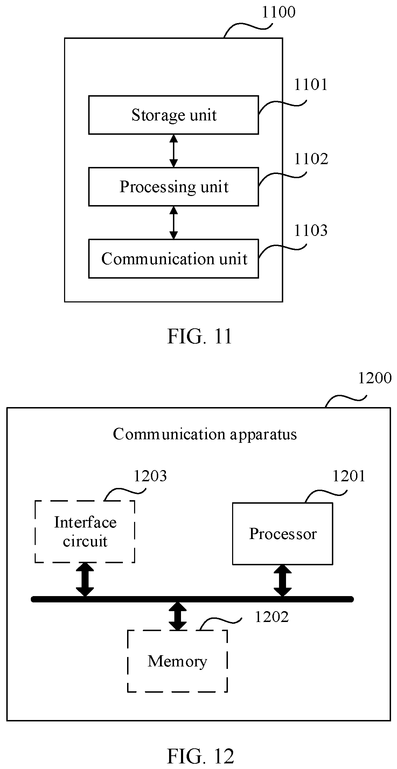

FIG. 11 shows a block diagram of a possible example of an apparatus according to an embodiment of this application. As shown in FIG. 11, an apparatus 1100 may include: a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. The apparatus 1100 may further include a storage unit 1101 that is configured to store program code and/or data of the apparatus 1100.

The apparatus 1100 may be the first communication apparatus (for example, the AP) in the foregoing embodiments, or may be a component (for example, a circuit or a chip) disposed in the AP. The processing unit 1102 may support the apparatus 1100 in performing actions of the AP in the foregoing method examples. Alternatively, the processing unit 1102 mainly performs internal actions of the AP in the method examples, and the communication unit 1103 may support communication between the apparatus 1100 and another device.

For example, in an embodiment, the communication unit 1103 is configured to send time synchronization information through a first frequency domain resource, where the time synchronization information indicates start time of a first superframe; and the processing unit 1102 is configured to communicate with a station STA in the first superframe through a second frequency domain resource in a dynamic scheduling manner, where a frequency corresponding to the first frequency domain resource is lower than a frequency corresponding to the second frequency domain resource.

The apparatus 1100 may be the second communication apparatus (for example, the STA) in the foregoing embodiments, or may be a component (for example, a circuit or a chip) disposed in the STA. The processing unit 1102 may support the apparatus 1100 in performing actions of the STA in the foregoing method examples. Alternatively, the processing unit 1102 mainly performs internal actions of the STA in the method examples, and the communication unit 1103 may support communication between the apparatus 1100 and another device.

In an embodiment, the communication unit 1103 is configured to receive time synchronization information from an AP through a first frequency domain resource, where the time synchronization information indicates start time of a first superframe; and the processing unit 1102 is configured to communicate with the AP in the first superframe through a second frequency domain resource in a dynamic scheduling manner, where a frequency corresponding to the first frequency domain resource is lower than a frequency corresponding to the second frequency domain resource.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 12 is a diagram of a structure of a communication apparatus according to an embodiment of this application. The communication apparatus is configured to implement operations of the first communication apparatus (for example, the AP) in the foregoing embodiment.

As shown in FIG. 12, a communication apparatus 1200 may include a processor 1201, a memory 1202, and an interface circuit 1203. The processor 1201 may be configured to: process a communication protocol and communication data, and control the communication apparatus 1200. The memory 1202 may be configured to store a program and data, and the processor 1201 may execute, based on the program, the method performed by the AP in embodiments of this application. The interface circuit 1203 may be used by the communication apparatus 1200 to communicate with another device. The communication may be wired communication or wireless communication. The interface circuit may also be replaced with a transceiver.

Alternatively, the memory 1202 may be externally connected to the communication apparatus 1200. In this case, the communication apparatus 1200 may include the interface circuit 1203 and the processor 1201. Alternatively, the interface circuit 1203 may be externally connected to the communication apparatus 1200. In this case, the communication apparatus 1200 may include the memory 1202 and the processor 1201. When both the interface circuit 1203 and the memory 1202 are externally connected to the communication apparatus 1200, the communication apparatus 1200 may include the processor 1201.

The communication apparatus shown in FIG. 12 can implement processes related to the AP in the foregoing method embodiments. Operations and/or functions of the modules in the communication apparatus shown in FIG. 12 are respectively used to implement corresponding procedures in the foregoing method embodiments. For details, refer to the descriptions in the foregoing method embodiments. To avoid repetition, detailed descriptions are properly omitted herein.

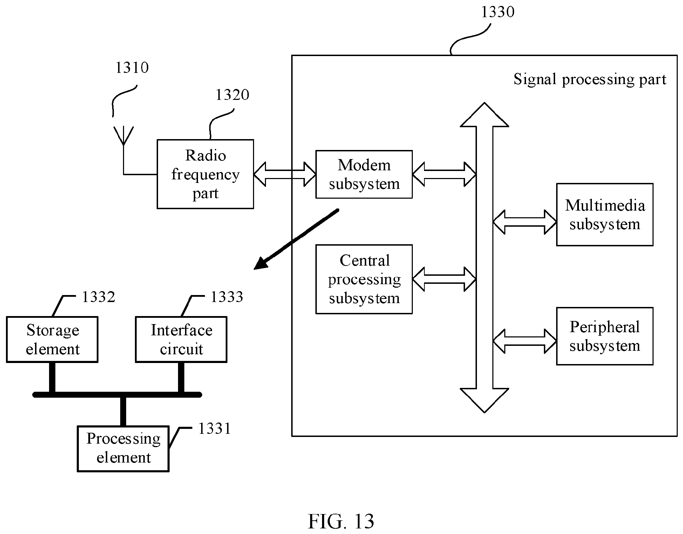

FIG. 13 is a diagram of a structure of a communication apparatus according to an embodiment of this application. The communication apparatus is configured to implement operations of the second communication apparatus (for example, the STA) in the foregoing embodiment. As shown in FIG. 13, the communication apparatus includes an antenna 1310, a radio frequency part 1320, and a signal processing part 1330. The antenna 1310 is connected to the radio frequency part 1320. In a downlink direction, the radio frequency part 1320 receives, through the antenna 1310, information sent by an AP, and sends the information sent by the AP to the signal processing part 1330 for processing. In an uplink direction, the signal processing part 1330 processes information of the STA, and sends the information to the radio frequency part 1320. The radio frequency part 1320 processes the information of the STA, and then sends processed information to the AP through the antenna 1310.

The signal processing part 1330 may include a modem subsystem, configured to implement processing on each communication protocol layer of data. The signal processing part 1330 may further include a central processing subsystem, configured to implement processing on a STA operating system and an application layer. The signal processing part 1330 may further include other subsystems, for example, a multimedia subsystem and a peripheral subsystem. The multimedia subsystem is configured to implement control on a camera, screen display, and the like, and the peripheral subsystem is configured to implement a connection with another device. The modem subsystem may be a separately disposed chip.

The modem subsystem may include one or more processing elements 1331, for example, a main control CPU and another integrated circuit. In addition, the modem subsystem may further include a storage element 1332 and an interface circuit 1333. The storage element 1332 is configured to store data and a program. However, a program used to perform the method performed by the STA in the foregoing method may not be stored in the storage element 1332, but is stored in a memory other than the modem subsystem. The modem subsystem loads and uses the program during use. The interface circuit 1333 is configured to communicate with another subsystem.

The modem subsystem may be implemented by using a chip. The chip includes at least one processing element and an interface circuit. The processing element is configured to perform steps of any method performed by the foregoing STA, and the interface circuit is configured to communicate with another apparatus. In an implementation, the units for implementing the steps in the foregoing methods by the STA may be implemented in a form of scheduling a program by a processing element. For example, the apparatus used as the STA includes a processing element and a storage element, and the processing element invokes a program stored in the storage element, to perform the method performed by the STA in the foregoing method embodiments. The storage element may be a storage element whose processing element is located on a same chip, that is, an on-chip storage element.

In another implementation, a program used to perform the method performed by the STA in the foregoing method may be in a storage element, that is, an off-chip storage element, located on a chip different from the processing element. In this case, the processing element invokes a program from the off-chip storage element or loads a program on the on-chip storage element, to invoke and perform the method performed by the STA in the foregoing method embodiments.

In another implementation, a unit for implementing the steps in the foregoing method by the STA may be configured as one or more processing elements. These processing elements are disposed on the modem subsystem. The processing element herein may be an integrated circuit, for example, one or more ASICs, one or more DSPs, one or more FPGAs, or a combination of these integrated circuits. These integrated circuits may be integrated together to form a chip.

Units for implementing the steps in the foregoing methods by the STA may be integrated together and implemented in a form of an SOC. The SOC chip is configured to implement the foregoing methods. At least one processing element and a storage element may be integrated into the chip, and the processing element invokes a program stored in the storage element to implement the foregoing method performed by the STA. Alternatively, at least one integrated circuit may be integrated into the chip, to implement the foregoing method performed by the STA. Alternatively, with reference to the foregoing implementations, functions of some units may be implemented by invoking a program by the processing element, and functions of some units may be implemented by the integrated circuit.

It can be learned that the foregoing apparatus used for a STA may include at least one processing element and an interface circuit, where the at least one processing element is configured to perform any method performed by the STA provided in the foregoing method embodiments. The processing element may perform, in a first manner, some or all steps performed by the STA by invoking a program stored in the storage element; or may perform, in a second manner, some or all steps performed by the STA by using an integrated logic circuit of hardware in the processor element in combination with instructions; or certainly, may perform, in combination with the first manner and the second manner, some or all steps performed by the STA.

The processing element herein is the same as that described above, and may be implemented by using a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 11. The storage element may be a memory, or may be a general name of a plurality of memories.

The STA shown in FIG. 13 can implement processes related to the STA in the foregoing method embodiments. Operations and/or functions of the modules in the STA shown in FIG. 13 are respectively used to implement corresponding procedures in the foregoing method embodiments. For details, refer to the descriptions in the foregoing method embodiments. To avoid repetition, detailed descriptions are properly omitted herein.

Embodiments of this application further provide a communication system. The communication system may include an AP and a STA. The AP is configured to perform the steps on an AP side in the foregoing method embodiments, and the STA is configured to perform the steps on a STA side in the foregoing method embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to an access point AP, and the method comprises:
sending time synchronization information through a first frequency domain resource, wherein the time synchronization information indicates start time of a first superframe; and
communicating with a station STA in the first superframe through a second frequency domain resource in a dynamic scheduling manner, wherein
a frequency corresponding to the first frequency domain resource is lower than a frequency corresponding to the second frequency domain resource.

2. The method according to claim 1, wherein the first superframe comprises an announcement transmission interval and a data transmission interval; and
the communicating with a STA in the first superframe through a second frequency domain resource in a dynamic scheduling manner comprises:
sending first scheduling information to the STA in the announcement transmission interval through the second frequency domain resource, wherein the first scheduling information indicates a first time domain resource allocated to the STA in the data transmission interval; and
performing data transmission with the STA on the first time domain resource through the second frequency domain resource.

3. The method according to claim 2, wherein the announcement transmission interval comprises K announcement transmission subintervals, each of the K announcement transmission subintervals corresponds to at least one STA associated with the AP, the K announcement transmission subintervals comprise a first announcement transmission subinterval, the first announcement transmission subinterval corresponds to the STA, and K is a positive integer; and
the sending first scheduling information to the STA in the announcement transmission interval through the second frequency domain resource comprises:
sending the first scheduling information to the STA in the first announcement transmission subinterval through the second frequency domain resource.

4. The method according to claim 2 or 3, wherein the data transmission interval comprises a downlink data transmission interval and/or an uplink data transmission interval, the downlink data transmission interval comprises a plurality of downlink data transmission subintervals, and the uplink data transmission interval comprises a plurality of uplink data transmission subintervals; and
the first time domain resource comprises at least one of the plurality of downlink data transmission subintervals, or the first time domain resource comprises at least one of the plurality of uplink data transmission subintervals.

5. The method according to claim 4, wherein when the data transmission interval comprises the downlink data transmission interval and the uplink data transmission interval, the plurality of downlink data transmission subintervals are consecutive in time domain, and the plurality of uplink data transmission subintervals are consecutive in time domain; and
a first time interval is comprised between the downlink data transmission interval and the uplink data transmission interval, and the first time interval is used by the AP and/or the STA to perform transmit/receive switching.

6. The method according to any one of claims 2 to 5, wherein the first superframe further comprises a schedule request interval; and
the method further comprises:
receiving a schedule request from the STA in the schedule request interval through the second frequency domain resource, wherein the schedule request is used to request to allocate a second time domain resource to the STA in a data transmission interval of a second superframe; and
the second superframe is a superframe after the first superframe.

7. The method according to claim 6, wherein the schedule request interval comprises N schedule request subintervals, each of the N schedule request subintervals corresponds to the at least one STA associated with the AP, the N schedule request subintervals comprise a first schedule request subinterval, the first schedule request subinterval corresponds to the STA, and N is a positive integer; and
the receiving a schedule request from the STA in the schedule request interval through the second frequency domain resource comprises:
receiving the schedule request from the STA in the first schedule request subinterval through the second frequency domain resource.

8. The method according to any one of claims 1 to 7, wherein the first superframe comprises a third time interval, start time of the third time interval is the start time of the first superframe, and the third time interval is used by the AP and/or the STA to perform transmit/receive switching.

9. The method according to claim 8, wherein the communicating with a STA in the first superframe through a second frequency domain resource in a dynamic scheduling manner comprises:
performing clear channel assessment in the third time interval; and
if a result of the clear channel assessment is that a channel is clear, communicating with the STA in the first superframe through the second frequency domain resource in the dynamic scheduling manner.

10. The method according to any one of claims 1 to 9, wherein the method further comprises:
sending indication information through the first frequency domain resource, wherein the indication information indicates duration of a beamforming training period, the beamforming training period comprises at least one superframe, and the first superframe is any superframe in the at least one superframe; and
when the first superframe is a 1^{st} superframe within the beamforming training period, the first superframe further comprises an association-beamforming training A-BFT interval, wherein the A-BFT interval is used by the AP and the STA to perform beamforming training.

11. The method according to any one of claims 1 to 10, wherein the method further comprises:
sending configuration information through the first frequency domain resource, wherein the configuration information is used to configure the second frequency domain resource.

12. A communication method, wherein the method is applied to a STA, and the method comprises:
receiving time synchronization information from an AP through a first frequency domain resource, wherein the time synchronization information indicates start time of a first superframe; and
communicating with the AP in the first superframe through a second frequency domain resource in a dynamic scheduling manner, wherein
a frequency corresponding to the first frequency domain resource is lower than a frequency corresponding to the second frequency domain resource.

13. The method according to claim 12, wherein the first superframe comprises an announcement transmission interval and a data transmission interval; and
the communicating with the AP in the first superframe through a second frequency domain resource in a dynamic scheduling manner comprises:
receiving first scheduling information from the AP in the announcement transmission interval through the second frequency domain resource, wherein the first scheduling information indicates a first time domain resource allocated to the STA in the data transmission interval; and
performing data transmission with the AP on the first time domain resource through the second frequency domain resource.

14. The method according to claim 13, wherein the announcement transmission interval comprises K announcement transmission subintervals, each of the K announcement transmission subintervals corresponds to at least one STA associated with the AP, the K announcement transmission subintervals comprise a first announcement transmission subinterval, the first announcement transmission subinterval corresponds to the STA, and K is a positive integer; and
the receiving first scheduling information from the AP in the announcement transmission interval through the second frequency domain resource comprises:
receiving the first scheduling information from the AP in the first announcement transmission subinterval through the second frequency domain resource.

15. The method according to claim 13 or 14, wherein the data transmission interval comprises a downlink data transmission interval and/or an uplink data transmission interval, the downlink data transmission interval comprises a plurality of downlink data transmission subintervals, and the uplink data transmission interval comprises a plurality of uplink data transmission subintervals; and
the first time domain resource comprises at least one of the plurality of downlink data transmission subintervals, or the first time domain resource comprises at least one of the plurality of uplink data transmission subintervals.

16. The method according to claim 15, wherein when the data transmission interval comprises the downlink data transmission interval and the uplink data transmission interval, the plurality of downlink data transmission subintervals are consecutive in time domain, and the plurality of uplink data transmission subintervals are consecutive in time domain; and
a first time interval is comprised between the downlink data transmission interval and the uplink data transmission interval, and the first time interval is used by the AP and/or the STA to perform transmit/receive switching.

17. The method according to any one of claims 13 to 16, wherein the first superframe further comprises a schedule request interval; and
the method further comprises:
sending a schedule request to the AP in the schedule request interval through the second frequency domain resource, wherein the schedule request is used to request to allocate a second time domain resource to the STA in a data transmission interval of a second superframe; and
the second superframe is a superframe after the first superframe.

18. The method according to claim 17, wherein the schedule request interval comprises N schedule request subintervals, each of the N schedule request subintervals corresponds to the at least one STA associated with the AP, the N schedule request subintervals comprise a first schedule request subinterval, the first schedule request subinterval corresponds to the STA, and N is a positive integer; and
the sending a schedule request to the AP in the schedule request interval through the second frequency domain resource comprises:
sending the schedule request to the AP in the first schedule request subinterval through the second frequency domain resource.

19. The method according to any one of claims 12 to 18, wherein the first superframe comprises a third time interval, start time of the third time interval is the start time of the first superframe, and the third time interval is used by the AP and/or the STA to perform transmit/receive switching.

20. The method according to claim 19, wherein the communicating with the AP in the first superframe through a second frequency domain resource in a dynamic scheduling manner comprises:
performing clear channel assessment in the third time interval; and
if a result of the clear channel assessment is that a channel is clear, communicating with the AP in the first superframe through the second frequency domain resource in the dynamic scheduling manner.

21. The method according to any one of claims 12 to 20, wherein the method further comprises:
receiving indication information from the AP through the first frequency domain resource, wherein the indication information indicates duration of a beamforming training period, the beamforming training period comprises at least one superframe, and the first superframe is any superframe in the at least one superframe; and
when the first superframe is a 1^{st} superframe within the beamforming training period, the first superframe further comprises an A-BFT interval, wherein the A-BFT interval is used by the AP and the STA to perform beamforming training.

22. The method according to any one of claims 12 to 21, wherein the method further comprises:
receiving configuration information from the AP through the first frequency domain resource, wherein the configuration information is used to configure the second frequency domain resource.

23. A communication apparatus, comprising a processor, wherein the processor is coupled to a memory, the memory stores a computer program, and the processor is configured to invoke the computer program in the memory, so that the communication apparatus performs the method according to any one of claims 1 to 11 or the method according to any one of claims 12 to 22.

24. A computer-readable storage medium, wherein the storage medium stores a computer program or instructions, and when the computer program or the instructions is/are executed by a computer, the method according to any one of claims 1 to 11 or the method according to any one of claims 12 to 22 is implemented.

25. A computer program product, wherein when a computer reads and executes the computer program product, the computer is enabled to perform the method according to any one of claims 1 to 11 or the method according to any one of claims 12 to 22.
